Europäisches Patentamt

European Patent Office

Office européen des brevets

(19)

(11) Numéro de publication: **0 043 782
B1**

(12) **FASCICULE DE BREVET EUROPEEN**

(45) Date de publication du fascicule du brevet:
01.08.84

(51) Int. Cl.³: **B 29 C 17/07**

(21) Numéro de dépôt: **81420092.9**

(22) Date de dépôt: **12.06.81**

(54) **Procédé pour la fabrication de profilés tubulaires rigides à parois minces.**

(30) Priorité: **13.06.80 FR 8013158**

(43) Date de publication de la demande:
**13.01.82 Bulletin 82/2**

(45) Mention de la délivrance du brevet:
**01.08.84 Bulletin 84/31**

(84) Etats contractants désignés:
**AT BE CH DE GB IT LI LU NL SE**

(56) Documents cités:
**DE - B - 2 705 775
FR - A - 2 184 857
FR - A - 2 289 320
FR - A - 2 320 176
FR - A - 2 336 233
FR - A - 2 339 481
FR - A - 2 365 423
FR - A - 2 389 478
FR - A - 2 413 195**

**RESEARCH DISCLOSURE, vol. 177, janvier 1975, abrégé 12906 "Creep reduction by increasing molecular orientation level", pages 7,8**

(73) Titulaire: **RHONE-POULENC SPECIALITES CHIMIQUES, "Les Miroirs" 18, Avenue d'Alsace, F-92400 Courbevoie (FR)**

(72) Inventeur: **Bonnebat, Claude, 5, rue Alfred de Musset, F-77340 - Pontault Combault (FR)**
Inventeur: **Macabrey, Louis, 25, rue de Boulogne, F-77290 - Mitry le Neuf (FR)**

(74) Mandataire: **Trolliet, Maurice et al, RHONE-POULENC RECHERCHES Service Brevets Chimie et Polymères Centre de Recherches de Saint-Fons B.P. 62, F-69192 St-Fons Cédex (FR)**

## Description

L'invention concerne un procédé pour la fabrication à haute cadence de profilés tubulaires de grande longueur rigides biorientés à parois minces en matière thermoplastique.

Par profilés tubulaires de grande longueur on entend selon l'invention des tubes creux de section transversale cylindrique, rectangulaire ou autre, de section droite linéaire ou variable le long de leur axe, ayant un diamètre interne ou diamètre inscrit au moins égal à 2 cm et un rapport longueur/diamètre compris entre 10/1 et 300/1. Par parois minces on entend une épaisseur comprise entre 0,15 mm et environ 2 mm. Les profilés sont ouverts aux deux extrémités.

D'après les procédés connus concernant la fabrication de tubes creux biaxialement étirés, le tube sortant en continu d'une extrudeuse à l'état thermoplastique est biétiré par une opération simultanée au cours de laquelle l'étirage longitudinal est obtenu par traction tandis que la section est simultanément agrandie à l'aide d'une surpression interne dans un manchon de calibrage ou sur un mandrin interne dont la section augmente en fonction diamètre et de l'épaisseur voulus. Ces procédés fonctionnent en continu, en ligne avec l'extrudeuse. La transposition de ce procédé aux matières thermoplastiques orientables à partir de l'état amorphe implique que le tube préformé sortant en continu de l'extrudeuse soit rapidement refroidi à l'état amorphe puis réchauffé à la température de biétirage. De tels procédés posent des problèmes de cadence et de contrôle de températures et nécessitent l'utilisation d'un lubrifiant pour permettre un écoulement régulier du tube dans le dispositif de calibrage. Ce type de technique est peu adapté à la réalisation de tubes rigides à parois minces car il présente l'inconvénient de conduire à la formation d'un tube dont l'épaisseur n'est pas constante du fait des frottements entre les parois du tube et le dispositif de calibrage, frottements qui provoquent des irrégularités dans l'étirage. Il est très difficile en outre de réguler le taux d'étirage en direction longitudinale et transversale dans les rapports permettant l'obtention des propriétés mécaniques optimales.

Les difficultés inhérentes aux procédés en continu s'accroissent d'une manière considérable lorsque l'on veut former des profilés dont la paroi n'est pas lisse ou dont la section est variable, par exemple des profilés comportant des gorges ou saillies, des cannelures, pans coupés, parties saillantes ou rentrantes de renforcement ou de décoration et qui doivent être conformés par soufflage interne ou dépression dans des demi-moules disposés en série et qui se déplacent avec la paraison.

Un but général de l'invention est de réaliser un procédés à haute cadence pour la fabrication de profilés tubulaires selon les fermes du préambule de la revendication 1.

Le procédé selon l'invention est caractérisé en ce que:

– on place une ébauche tubulaire ouverte à ses deux extrémités, pré-chauffée à la température de biorientation de la matière, dans l'axe d'un moule ayant la configuration et les dimensions du profilé à obtenir,

– on exerce une pression interne de fluide pour provoquer simultanément de manière régulière l'étirage longitudinal total et un pré-gonflement radial jusqu'à une valeur au moins égal au rapport naturel d'étirage transversal de la matière, mais inférieure au diamètre final de manière à éviter tout contact entre l'ébauche et les parois du moule avant la fin de l'étirage longitudinal,

– on augmente ensuite la pression interne pour provoquer un étirage transversal complémentaire jusqu'à dilater à fond l'ébauche contre les parois du moule,

– et efin on refroidit le tube, puis on relâche la pression.

Il a déjà été décrit dans l'état antérieur de la technique des procédés d'étirage biaxial par soufflage en deux étapes séparées. Ainsi, selon la demande française n° 76/02 688 publiée sous le n° 2 339 481, le mode de déformation est un soufflage en deux étapes, mais le premier étirage est uniquement longitudinal sans pré-gonflement radial. Dans la publication référencée Research Disclosure, volume 177, janvier 1975, abrégé n° 12 906, le soufflage est réalisé en deux étapes dans deux moules différents; dans le premier moule, la déformation comprend un étirage longitudinal et un étirage radial qui sont tous deux partiels et ne sont pas simultanés; dans le second moule intervient un complément de biétirage. Ces procédés antérieurs ne permettent cependant pas de fabriquer les profilés tubulaires de grande longueur et d'épaisseur constante visés par la présente invention et ils ne s'appliquent vraiment bien qu'à la convection d'articles soufflés courts, comme par exemple des bouteilles.

Comme matière thermoplastique convenant au procédé selon l'invention on fait appel aux polymères cristallins présentant un rapport naturel d'étirage bien défini tels que les polyesters saturés et les polyamides. La matière thermoplastique particulièrement préférée est constituée par les homopolymères et copolymères de polytéréphtalate d'éthylène contenant au moins 90 % en moles de restes d'acide téréphtalique et au moins 90 % en moles de restes d'éthylène glycol et dont la viscosité intrinsèque, mesurée dans 1'o. chlorophénol est comprise entre 0,50 dl/g et 1,10 dl/g.

Le «rapport naturel d'étirage» est défini comme le seuil critique à partir duquel le matériau impose, du fait de son comportement rhéologique, une régularisation spontanée de sa déformation. Les rapports naturels d'étirage longitudinal et transversal varient en fonction de la nature du polymère, de sa viscosité et de la température à laquelle s'effectue l'étirage. L'existence desdits rapports peut être mis en évidence, et leurs valeurs peuvent être déterminées par l'étude du soufflage d'un tronçon de tube fermé et préalablement soumis à un conditionnement thermique uniforme lorsque l'on observe sous l'influence d'une pression interne croissante la formation intermédiaire d'un cylindre déformé parfaitement uniforme dans la section droite, à partir de laquelle la déformation se poursuit simultanément et uniformément dans toutes les zones. Les valeurs $\lambda_{Tn}$ = diamètre observé/diamètre initial moyen et $\lambda_{Ln}$ = longueur observée/longueur initiale moyenne correspondent au rapport naturel d'étirage transversal et longitudinal. Le rapport naturel d'étirage biaxial est le produit $\lambda_{Tn} \cdot \lambda_{Ln}$. Dans le cas où le profilé n'est pas cylindrique, on se réfère au diamètre inscrit (plus petit cercle inscrit dans la partie droite) pour définir le diamètre de l'ébauche expansée à son rapport naturel d'étirage.

Dans le procédé d'étirement biaxial selon l'invention l'ébauche tubulaire est allongée axialement à la valeur $\lambda_{Ln}$ non par des moyens mécaniques mais à l'aide d'un fluide sous pression tandis qu'elle est simultanément pré-gonflée à une valeur inférieure au diamètre final et au moins égale au rapport naturel d'étirage transversal $\lambda_{Tn}$. Dans un second temps on augmente la pression au sein du tube étiré de manière à provoquer une expansion supplémentaire dans le sens transversal jusqu'à plaquer le matériau contre les parois du moule. De manière particulièrement favorable l'ébauche est pré-gonflée à la valeur $\lambda_{Tn}$ ou au maximum à 5 % au-delà de ladite valeur.

L'ébauche tubulaire est obtenue par découpage d'un tube préalablement extrudé, calibré et refroidi. Pour obtenir un profilé fini de longueur et diamètre définis il est nécessaire de choisir la géométrie initiale de l'ébauche tubulaire en fonction des conditions d'étirage et des caractéristiques propres du matériau de sorte que, au stade intermédiaire du rapport naturel d'étirage biaxial l'ébauche atteigne 100 % de la longueur du tube final étiré et environ 70 à 90 % de son diamètre. Pour le polytéréphtalate d'éthylène le rapport naturel d'étirage longitudinal $\lambda_{Ln}$ est compris entre 1,2 et 3,5 et le rapport naturel d'étirage transversal $\lambda_{Tn}$ est compris entre 3,2 et 5, selon la viscosité intrinsèque du matériau et la température d'étirage.

Le moule de soufflage est généralement constitué de demi-coquilles dont la forme correspond à celle du profilé à obtenir et qui peut comporter des parois lisses ou des parties en relief.

La température précise à laquelle l'ébauche est chauffée dépend de la matière dont elle est formé. Si ce tube est en polytéréphtalate d'éthylène une température de l'ordre de 90 − 120°C est utilisable. Le moule peut être chauffé ou non. La manière préférentielle dans le but d'améliorer le rendu de l'empreinte on utilise un moule à parois chaudes, le chauffage pouvant être assuré de façon homogène par circulation d'huile dans une double enveloppe. La température du moule est choisie en fonction de la nature du polymère et des propriétés désirées selon l'usage du profilé. On peut choisir une plage de températures permettant une relaxation des contraintes internes ou bien des températures plus élevées pour une thermofixation de la matière provoquant éventuellement une augmentation de la cristallinité.

Le fluide de pression utilisé pour la dilatation et l'extension de l'ébauche est injecté au travers d'une tubulure d'admission fixée à au moins l'une des extrémités de l'ébauche, l'autre extrémité étant éventuellement obturée de toute manière appropriée. On peut à cet effet utiliser un bouchon en matière isolante. De manière à éviter le contact de l'ébauche avec les parois du moule dans la phase de pré-soufflage il est utile de prévoir un dispositif de guidage à faible inertie permettant de contrôler l'alignement du tube dans l'axe du moule. La pression nécessaire dépend de la géométrie initiale de l'ébauche ainsi que de la matière utilisée et de sa température de mise en oeuvre. Par exemple pour une ébauche cylindrique en polytéréphtalate d'éthylène de viscosité intrinsèque de l'ordre de 0,70 à 0,80 dl/g ayant un diamètre de 20 à 25 mm et soufflée à 95−120°C on utilise une pression initiale de 3 à 8 bars; pour effectuer un surétirage transversal de 10 à 30 % au-delà du rapport naturel d'étirage une pression comprise entre 10 et 25 bars est nécessaire. Pour éviter un refroidissement de la matière, le fluide de soufflage peut être préchauffé jusqu'à une température voisine de la température de biorientation.

Lorsque l'ébauche a été dilatée à fond dans le moule on refroidit le profilé tubulaire de toute manière appropriée par exemple en refroidissant les moitiés de moule ou en balayant l'intérieur du profilé par un fluide de refroidissement. Il est préférable de maintenir au moins en partie la pression interne jusqu'à ce que la température de la matière soit descendue au-dessous du point où un retrait de forme pourrait se produire.

Dans une variante du procédé la pression interne est partiellement relâchée de manière à laisser la matière se rétracter librement puis la pression est à nouveau appliquée, la matière est refroidie à l'état rigide et la pression est relâchée.

Le procédé selon l'invention permet d'obtenir des profilés creux, rigides, biorientés, transparents, à parois minces, de forme quelconque avec une reproduction fidèle de l'empreinte, une grande régularité dans l'épaisseur des parois et un excellent aspect de surface. Les profilés obtenus présentent en outre des propriétés mécaniques et une stabilité thermique dimensionnelle supérieures à celles qui seraient obtenues selon les procédés classiques d'extrusion en continu. Leurs propriétés permettent de les utiliser par exemple pour le transport de fluides sous pression, comme tubes protecteurs de luminaires ou après tronçonnage comme corps de boites dans l'industrie de l'emballage. Pour la réalisation de corps de boites la forme du profilé est choisie de manière à correspondre à la répétition de celle des éléments que l'on désire obtenir. Il peut être avantageux de prévoir une gorge saillante ou cannelure au niveau de chaque élément, le tronçonnage ayant lieu au niveau de la cannelure, ce qui facilite la fixation ultérieure sur les corps de boites par sertissage ou soudure des fond en métal ou en matière plastique exécutés séparément. Les boîtes obetnues peuvent être utilisées pour la conservation de liquides pressurisés ou non et de denrées alimentaires.

L'invention est illustrée par les exemples de réalisation suivants.

Exemple 1

On utilise un tronçon de tube ou ébauche tubulaire ayant une longueur étirable de 55 cm, un diamètre externe de 24,5 mm et une épaisseur de paroi de 2,75 mm. L'ébauche est obtenue par découpage d'un tube cylindrique extrudé, calibré et refroidi à l'état amorphe en polytéréphtalate d'éthylène ayant une viscosité de 0,78 dl/g (mesurée à 25°C dans l'orthochlorophénol).

L'ébauche est préchauffée à environ 110°C au moyen d'éléments infra-rouge et est transférée à l'intérieur d'un moule vertical à parois froides composé de deux demi-coquilles cylindriques ayant un diamètre interne de 99 mm et une longueur de 140 cm. L'ébauche est obturée hermétiquement à une extrémité par un bouchon en matière isolante relié à une tige de guidage et l'autre extrémité est reliée à une source d'air comprimé par l'intermédiaire d'un tube d'admission. On insuffle l'air comprimé dans l'ébauche sous une pression de 6 bars ce qui provoque simultanément l'étirage longitudinal total et un pré-gonflage correspondant à un rapport d'étirage transversal moyen de 3,88. Dès que l'étirage longitudinal est obtenu on augmente la pression jusqu'à 20 bars de manière à dilater radialement l'ébauche jusqu'à épouser la forme du moule. Après un temps de contact de 5 secondes on relâche la pression interne puis on démoule le profilé obtenu présentant une longueur de 140 cm, un diamètre interne de 99 mm et une épaisseur de 0,24 mm.

Le profilé a un module d'élasticité en traction de 3050 MPa en direction longitudinale et de 6885 MPa en direction transversale selon la norme NF 51034. Il présente une uniformité d'épaisseur de ± 5 % dans le sens longitudinal sur 95 % de la partie droite.

Exemple 2

On utilise une ébauche tubulaire cylindrique ayant une longueur de 2 mètres, un diamètre externe de 27,2 mm et une épaisseur de paroi de 3,5 mm en polytéréphtalate d'éthylène de viscosité intrinsèque 0,70 dl/g.

L'ébauche est préchauffée à 100°C et transférée dans un moule dont les parois sont chauffées à 120°C. Le moule a une longueur de 5 mètres et un diamètre interne de 115 mm.

L'ébauche est soufflée dans un premier temps à l'aide d'air préchauffé à environ 100°C sous une pression de 5 bars pour provoquer simultanément l'étirage longitudinal total et un prégonflage correspondant à un rapport d'étirage transversal de 4. Dès que l'étirage longitudinal total est obtenu, on augmente la pression à l'intérieur de l'ébauche intermédiaire jusqu'à 20 bars. On maintient les parois du profilé pendant 10 secondes au contact des parois du moule chaud. On relâche partiellement la pression pour permettre à la matière de se rétracter librement, puis la pression est à nouveau appliquée. Finalement le profilé obtenu est refroidi intérieurement par balayage de $CO_2$ détendu et la pression est relâchée.

Le profilé a un module d'élasticité de 8125 MPa en direction transversale et de 3450 MPa en direction longitudinale. Il présente une uniformité d'épaisseur de ± 2,5 % dans le sens transversal et ± 3 % dans le sens longitudinal sur 95 % de la partie droite. Il présente en outre une excellente stabilité dimensionnelle jusqu'à 95°C.

Bien entendu l'invention n'est pas limitée aux modes de réalisation décrits et est susceptible de variantes accessibles à l'homme de l'art, suivant les applications envisagées. Ainsi les détails de forme et de structure peuvent être modifiés. L'ébauche tubulaire peut être constituée d'un matériau composite comportant un revêtement sur la paroi interne et/ou externe destiné à impartir une amélioration de certaines propriétés et qui peut être obtenu soit par co-extrusion, soit par enduction selon les méthodes connues. Il peut s'agir par exemple d'un revêtement barrière aux gaz et aux vapeurs à base de polymères ou copolymères d'acrylonitrile, de chlorure de vinylidène et/ou d'alcool polyvinylique ou de toute autre matière utilisée à cet effet.

On peut également, si on le désire, incorporer à la matière constitutive de l'ébauche des additifs tels que colorants, stabilisants, charges de renforcement. En tant que charges on préfère les fibres courtes comme les fibres de verre broyées et les charges lamellaires comme les micas, les graphites et les talcs qui ont la propriété de s'orienter localement dans le plan de la paroi du profilé biorienté en lui communiquant une plus grande rigidité, une meilleure tenue au fluage sous l'effet d'une pression interne et une imperméabilité accrue aux gaz et aux vapeurs.

**Revendication**

1. Procédé pour la fabrication à haute cadence de profilés tubulaires de grande longueur, rigides, à parois minces, en matière thermoplastique, ayant un diamètre interne ou diamètre inscrit au moins égal à 2 cm et un rapport longueur/diamètre compris entre 10/1 et 300/1, caractérisé en ce que:

– on place une ébauche tubulaire ouverte à ses deux extrémités, pré-chauffée à la température de biorientation de la matière, dans l'axe d'un moule ayant la configuration et les dimensions du profilé à obtenir,

– on exerce une pression interne de fluide pour provoquer simultanément de manière régulière l'étirage longitudinal total et un pré-gonflement radial jusqu'à une valeur au moins égal au rapport naturel d'étirage transversal de la matière, mais inférieure au diamètre final de manière à éviter tout contact entre l'ébauche et les parois de moule avant la fin de l'étirage longitudinal,

– on augmente ensuite la pression interne pour provoquer un étirage transversal complémentaire jusqu'à dilater à fond l'ébauche contre les parois du moule,

– et enfin on refroidit le tube, puis on relâche la pression.

2. Procédé selon la revendication 1, caractérisé en ce que le pré-gonflement radial est effectué à une vapeur comprise entre le rapport naturel d'étirage transversal et 5 % au-delà de cette valeur.

3. Procédé selon la revendication 1, caractérisé en ce que le pré-gonflement radial de l'ébauche représente 70 à 90 % du diamètre du profilé tubulaire final.

4. Procédé selon l'une quelconque des revendications 1 à 3, caractérisé en ce que le fluide de pression est chauffé jusqu'à la température d'orientation de la matière.

5. Procédé selon l'une quelconque des revendications 1 à 4, caractérisé en ce que le moule de soufflage est chaud.

6. Procédé selon l'une quelconque des revendications 1 à 5, caractérisé en ce que, après dilatation de l'ébauche contre les parois du moule, la pression interne est partiellement relâchée, puis est à nouveau appliquée, la matière est refroidie à l'état rigide et la pression est relâchée.

7. Procédé selon l'une quelconque des revendications 1 à 6, appliqué à la fabrication de profilés tubulaires en homo- et copolymères de polytéréphtalate d'éthylène, caractérisé en ce que l'ébauche tubulaire est préchauffée à une température comprise entre 90 et 120°C, on exerce une pression interne de manière à effectuer un étirage longitudinal total à la valeur du rapport naturel compris entre 1,2 et 3,5 et un pré-gonflement radial à la faleur du rapport naturel compris entre 3,2 et 5 et on augmente la pression pour dilater l'ébauche contre les parois du moule provoquant un sur-étirage transversal.

**Patentansprüche**

1. Verfahren zur Herstellung von dünnwandigen, starren, langen Rohrprofilen aus thermoplastischem Material mit einem Innendurchmesser oder eingeschriebenen Durchmesser von zumindest 2 cm und einem Verhältnis von Länge/Durchmesser zwischen 10/1 und 300/1 mit hoher Geschwindigkeit, dadurch gekennzeichnet, dass man
– einen auf die Biorientierungstemperatur des Materials vorgeheizten an seinen beiden Enden offenen rohrförmigen Vorformling in der Achse einer Form anordnet, die die Umrisse und Abmessungen des zu erhaltenden Profils aufweist,
– einen Innendruck mittels eines Fluids ausübt, um gleichzeitig und gleichmässig die gesamte Längsdehnung und eine vorläufige radiale Ausdehnung bis zu einem Wert zu erreichen, der zumindest gleich dem natürlichen transversalen Dehnungsverhältnis des Materials, jedoch kleiner als der endgültige Durchmesser ist, wobei man jeden Kontakt zwischen dem Vorformling und den Wänden der Form vor dem Ende der Längsdehnung vermeidet,
– dann den Innendruck steigert, um eine ergänzende transversale Dehnung hervorzurufen, bis die Aussenwand des Vorformlings an den Wänden der Form anliegt,
– und schliesslich das Rohr kühlt und dann den Druck ablässt.

2. Verfahren nach Anspruch 1, dadurch gekennzeichnet, dass die vorläufige radiale Dehnung auf einen Wert vorgenommen wird, der zwischen dem natürlichen transversalen Dehnungsverhältnis und 5 % darüber liegt.

3. Verfahren nach Anspruch 1, dadurch gekennzeichnet, dass die vorläufige radiale Dehnung des Vorformlings 70 bis 90 % des endgültigen Durchmessers des Rohrprofils ausmacht.

4. Verfahren nach einem der Ansprüche 1 bis 3, dadurch gekennzeichnet, dass das Druckfluid auf die Orientierungstemperatur des Materials aufgewärmt ist.

5. Verfahren nach einem der Ansprüche 1 bis 4, dadurch gekennzeichnet, dass die Blasform heiss ist.

6. Verfahren nach einem der Ansprüche 1 bis 5, dadurch gekennzeichnet, dass der Innendruck nach Ausweitung des Vorformlings bis zu den Formwänden teilweise abgelassen und dann neuerlich angelegt, das Material bis zum starren Zustand abgekühlt und der Druck abgelassen wird.

7. Verfahren nach einem der Ansprüche 1 bis 6, angewendet auf die Herstellung von Rohrprofilen aus Homo- und Copolymeren von Polyäthylenterephthalat, dadurch gekennzeichnet, dass man den rohrförmigen Vorformling auf eine Temperatur zwischen 90 und 120°C vorheizt, dass man einen solchen Innendruck ausübt, dass eine vollständige Längsdehnung auf den Wert des natürlichen Verhältnisses zwischen 1,2 und 3,5 und eine vorläufige radiale Dehnung auf den Wert des natürlichen Verhältnisses zwischen 3,2 und 5 erfolgt, und dass man den Druck steigert, um den Vorformling gegen die Formwände auszuweiten und eine transversale Überdehnung zu bewirken.

**Claims**

1. Process for the manufacture, at high cycle speed, of rigid thin–walled long tubular profiled sections from a thermoplastic, the profiled sections having an internal diameter or inscribed diameter of at least 2 cm and a length/diameter ratio of between 10/1 and 300/1, characterised in that
– a tubular blank open at its two ends and preheated to the biaxial orientation temperature of the material is placed along the axis of a mould having the configuration and dimensions of the profiled section to be produced,
– an internal fluid pressure is applied so as to cause, simultaneously and uniformly, total longitudinal stretching and radial pre-expansion to a value at least equal to the natural ratio of transverse stretching of the material, but less than the final diameter, to avoid any contact between the blank and the walls of the mould before the longitudinal stretching has been completed,

– the internal pressure is then increased to cause supplementary transverse stretching so as to dilate the blank completely against the walls of the mould,

– and the tube is finally cooled, after which the pressure is released.

2. Process according to Claim 1, charcterised in that the radial pre-expansion is effected to a value between the natural ratio of the transverse stretching and 5 % beyond this value.

3. Process according to Claim 1, characterised in that the radial pre-expansion of the blank represents 70 to 90 % of the diameter of the final tubular profiled section.

4. Process according to any one of Claims 1 to 3, characterised in that the pressure fluid is heated to the orientation temperature of the material.

5. Process according to any one of Claims 1 to 4, characterised in that the blowing mould ist hot.

6. Process according to any one of Claims 1 to 5, characterised in that after dilation of the blank against the walls of the mould, the internal pressure is partially released and is then applied afresh, the material is cooled to the rigid state and the pressure is released.

7. Process according to any one of Claims 1 to 6, applied to the manufacture of tubular profiled sections from poly (ethylene terephthalate) homopolymers and copolymers, characterised in that the tubular blank ist preheated to a temperature of between 90 and 120°C, an internal pressure is applied so as to effect total longitudinal stretching to the natural ratio of between 1.2 and 3.5 and radial pre-expansion to the natural ratio of between 3.2 and 5 and the pressure is increased to dilate the blank against the walls of the mould, thus causing additional transverse stretching.